# EUROPÄISCHE PATENTANMELDUNG

(11) **EP 0 703 123 A2**
(43) Veröffentlichungstag der Anmeldung: **27.03.1996**
(21) Anmeldenummer: 95114102.7
(22) Anmeldetag: 08.09.1995
(51) Int. Cl.: B60R 21/22

(54) **Airbag-Modul**

(30) Priorität: 23.09.1994 DE 4434036
(71) Anmelder: PARS Passive Rückhaltesysteme GmbH, D-63755 Alzenau (DE)
(72) Erfinder: Hoffmann, Rainer, D-63755 Alzenau (DE); Fellhauer, Joachim, D-63741 Aschaffenburg (DE)
(74) Vertreter: Rieger, Harald, Dr.

(57) **Zusammenfassung**

Für den Schutz der Insassen von Personenkraftwagen gegen einen dynamischen Seitenaufprall ist ein Airbag-Modul in der einem Fahrzeugsitz unmittelbar benachbarten Seitenstruktur des Personenkraftwagens oder in dem der Seitenstruktur unmittelbar benachbarten Abschnitt der Rückenlehne des Fahrzeugsitzes angeordnet, dessen Gassack im aufgeblähten Zustand in dem zwischen der Seitenstruktur und dem Kopf-Thorax-Bereich des auf dem Fahrzeugsitz sitzenden Insassens liegt. Um den Kopf-Thorax-Bereich definiert abfangen zu können, besteht der Gassack aus einer oberen zwischen dem Kopfbereich und der Seitenstruktur sich erstreckenden Gaskammer und einer unteren sich zwischen dem Thorax-Bereich und der Seitenstruktur erstreckenden Gaskammer.

## Beschreibung

Die Erfindung betrifft ein Airbag-Modul mit den Merkmalen nach dem Oberbegriff des Anspruchs 1.

Obwohl der Seitenaufprall von Kraftfahrzeugen nur 20 % aller Unfälle ausmacht, gehört der Seitenaufprall zu den Unfallarten mit den schwersten Verletzungen. Um die Gefahr schwerer und tödlicher Verletzungen von Insassen von Personenkraftwagen bei einem Seitenaufprall zu reduzieren, werden gemäß US-Standard-Nr. 214(FMVSS2l4) seit September 1993 bestimmte Anforderungen an die Aufpralleigenschaften von Personenkraftwagen - ausgedrückt in Beschleunigungswerten - gestellt. So darf jeder Personenwagen bei einem Seitenaufprall mittels einer mit einer Geschwindigkeit von 53,9 km/h bewegten, verformbaren, unter einem Winkel von 63° auf den Personenwagen auftreffenden Barriere für den Insassen die Seitenbeschleunigung des Brustkorbs von 85 g für Personenkraftwagen mit 4 Seitentüren und 90 g für Personenkraftwagen mit 2 Seitentüren und die Beschleunigung des Beckens von 130 g nicht überschreiten.

Zum Schutz der Fahrzeuginsassen gegen einen Seitenaufprall sind darüber hinaus zahlreiche Maßnahmen bekannt; so zeigen die GB-A-2 220 620, DE-A-4 223 620 und DE-A-4 301 193 eine in der Seitentür eines Kraftfahrzeugs untergebrachte Gassack-Aufprallschutz-Baueinheit, deren Gassack sich im Falle eines Seitenaufpralls im aufgeblähten Zustand zwischen dem Fahrzeuginsassen und die Seitenwand des Fahrzeugs schiebt. In der DE-A- 43 28 528 ist ein Fahrzeugsitz mit einer in der Rückenlehne angeordneten Gassack-Aufprallschutz-Baueinheit beschrieben, deren durch das von einem Gasgenerator erzeugte Gas sich aufblasender Gassack in dem Raum zwischen der Kopf-Hals-Partie des Insassen und der unmittelbar benachbarten Seitenstruktur des Fahrzeugs liegt.

Es ist die Aufgabe der vorliegenden Erfindung, den Gassack des Airbag-Moduls gemäß den Merkmalen des Oberbegriffs des Anspruchs 1 so zu gestalten, daß bei einem dynamischen Seitenaufprall des Personenkraftwagens der Kopf des Fahrzeuginsassen relativ härter als der Thorax beide aber gleichmäßig, d. h. ohne große Rückprallkräfte, abgefangen werden.

Die Lösung dieser Aufgabe erfolgt durch die im Anspruch 1 aufgeführten Maßnahmen.

Weitere vorzugsweise Ausgestaltungen dieser Maßnahmen sind in den Ansprüchen 2 bis 9 angegeben.

Die Erfindung ist in der Zeichnung beispielhaft schematisch dargestellt und wird nachstehend näher erläutert.

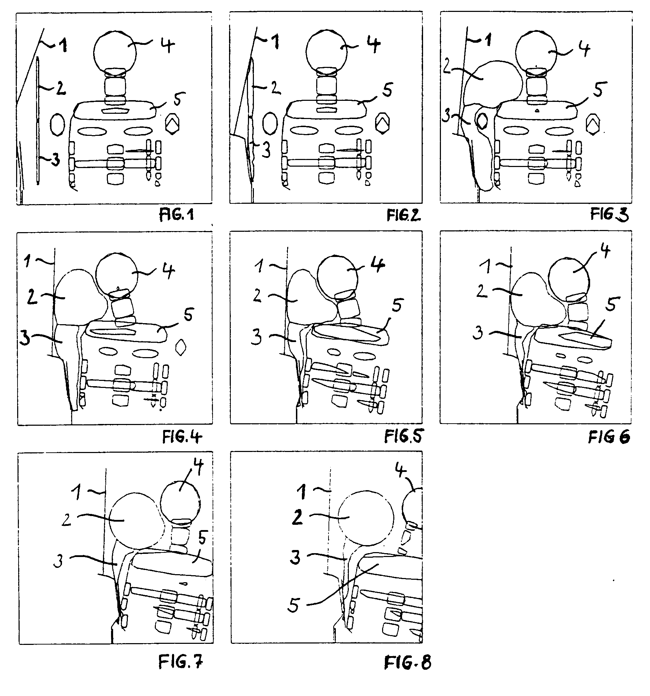

Die Fig. 1 bis 8 zeigen anhand eines Simulationsmodells den schematisierten Bewegungsablauf von Kopf und Thorax einer anthropomorphen Prüfpuppe sowie den Aufblasablauf des Gassacks einer in der Seitenstruktur eines Personenkraftwagens angeordneten Airbag-Moduls bei einem möglichen dynamischen Seitenaufprall des Personenkraftwagens auf ein massives Hindernis, nachdem die im Personenkraftwagen untergebrachten Beschleunigungsaufnehmer angesprochen haben.

In der Seitenstruktur (1) des Personenkraftwagens ist ein den Gassack umfassendes Airbag-Modul untergebracht. Der Gassack besteht aus einer oberen und einer unteren Gaskammer (2,3), die getrennt hergestellt und durch Nähen miteinander verbunden sind (Fig. 1).

Nach der ersten Berührung mit einem Hindernis bei einem dynamischen Seitenaufprall des Personenkraftwagens beginnen sich die Gaskammern (2,3) nach 1 ms (Fig. 2) aufzublasen, indem der Zündstrom auf den Zünder des Generators geschaltet wird. Nach 20 ms ist sowohl die obere als auch die untere Gaskammer (2,3) des Gassacks voll aufgeblasen (Fig. 3) und nach 30 ms schlagen der Kopf (4) und der Thorax (5) der anthropomorphen Prüfpuppe auf die aufgeblähten Gaskammern (2,3) auf (Fig. 4). Zu diesem Zeitpunkt herrschen in den Gaskammern (2,3) Drücke von 0,65 bis 0,85 bar. Aus der unteren Gaskammer (3) entweicht nach dem Aufschlag des Thorax (5) definiert das Gas innerhalb von weiteren 50 ms, so daß der gegenüber dem Kopf (4) relativ weichere Thorax (5) weich und ohne wesentliche Rückprallkräfte aufgefangen wird und die untere Gaskammer (3) nach 70 ms drucklos ist (Fig. 8).

Da der Abstand zwischen dem Kopf (4) und der Seitenstruktur (1) des Personenkraftwagens größer ist als der Abstand zwischen dem Thorax (5) und der Seitenstruktur (1) besitzt die obere Gaskammer (2) ein größeres Volumen als die untere Gaskammer (3).

Die Gasausströmcharakteristik der oberen Gaskammer (2) ist so ausgebildet, daß nach 70 ms die obere Gaskammer (2) noch weitgehend mit Gas gefüllt ist (Fig. 8) und demzufolge ein harter Aufschlag des Kopfes (4) auf die Seitenstruktur des Personenkraftwagens im Falle eines Sekundär-Seitenaufpralls vermieden wird.

## Patentansprüche

1. Airbag-Modul, insbesondere für den Schutz der Insassen von Personenkraftwagen gegen einen dynamischen Seitenaufprall, das in der einem Fahrzeugsitz unmittelbar benachbarten Seitenstruktur (1) des Personenkraftwagens oder in dem der Seitenstruktur unmittelbar benachbarten Abschnitt der Rückenlehne des Fahrzeugsitzes angeordnet ist und dessen Gassack im aufgeblähten Zustand in dem zwischen der Seitenstruktur und dem Kopf-Thorax-Bereich des auf dem Fahrzeugsitz sitzenden Insassens liegt, dadurch gekennzeichnet, daß der Gassack aus einer oberen zwischen dem Kopfbereich (4) und der Seitenstruktur (1) sich erstreckenden Gaskammer (2) und einer unteren sich zwischen dem Thorax-Bereich (5) und der Seitenstruktur erstreckenden Gaskammer (3) besteht, und die obere Gaskammer ein größeres Volumen als die untere Gaskammer aufweist.

2. Airbag-Modul nach Anspruch 1 dadurch gekennzeichnet, daß die Gasausströmcharakteristiken der Gaskammern (2,3) unterschiedlich und fahrzeugspezifisch auslegbar sind.

3. Airbag-Modul nach einem der Ansprüche 1 und 2, dadurch gekennzeichnet, daß jede Gaskammer (2,3) eine eigene Gaseintrittsöffnung besitzt.

4. Airbag-Modul nach Anspruch 3, gekennzeichnet durch einen Gasgenerator mit zwei Gasaustrittsöffnungen von denen die eine mit der oberen Gaskammer (2) und die andere mit der unteren Gaskammer (3) verbunden ist.

5. Airbag-Modul nach Anspruch 3, dadurch gekennzeichnet, daß für jede Gaskammer (2,3) ein Gasgenerator vorgesehen ist.

6. Airbag-Modul nach einem der Ansprüche 1 bis 5, dadurch gekennzeichnet, daß die untere Gaskammer (3) schneller als die obere Gaskammer (2) aufblasbar ist.

7. Airbag-Modul nach Anspruch 5, dadurch gekennzeichnet, daß die untere Gaskammer (3) nach 15 bis 25 ms und die obere Gaskammer (2) nach 35 bis 45 ms voll aufgeblasen ist.

8. Airbag-Modul nach einem der Ansprüche 1 bis 7, dadurch gekennzeichnet, daß der einteilige Gassack in eine obere und eine untere Gaskammer (2,3) unterteilt ist.

9. Airbag-Modul nach einem der Ansprüche 1 bis 7, dadurch gekennzeichnet, daß der Gassack aus einer jeweils getrennt hergestellten oberen und unteren Gaskammer (2,3), die in Verbundbauweise zusammengefügt sind, besteht.
